(19) Europäisches Patentamt
European Patent Office
Office européen des brevets

(11) Veröffentlichungsnummer : **0 132 518**
**B1**

(12) # EUROPÄISCHE PATENTSCHRIFT

(45) Veröffentlichungstag der Patentschrift : **03.12.86**

(21) Anmeldenummer : **84104852.3**

(22) Anmeldetag : **30.04.84**

(51) Int. Cl.[4] : **C 08 G 18/79**, C 08 G 18/72, C 08 G 18/80, C 09 D 3/72, C 09 D 5/46

(54) **Als Pulverlack bzw. Bindemittel für Pulverlacke geeignetes Stoffgemisch.**

(30) Priorität : **24.06.83 DE 3322718**

(43) Veröffentlichungstag der Anmeldung : **13.02.85 Patentblatt 85/07**

(45) Bekanntmachung des Hinweises auf die Patenterteilung : **03.12.86 Patentblatt 86/49**

(84) Benannte Vertragsstaaten : **AT BE CH DE FR GB IT LI NL SE**

(56) Entgegenhaltungen :
**EP-A- 0 009 694**
**EP-A- 0 023 626**
**EP-A- 0 026 448**
**EP-A- 0 047 452**
**EP-A- 0 083 732**
**DE-A- 2 551 634**

(73) Patentinhaber : **HÜLS AKTIENGESELLSCHAFT**
**Patentabteilung / PB 15 - Postfach 13 20**
**D-4370 Marl 1 (DE)**

(72) Erfinder : **Disteldorf, Josef, Dr.**
**Am Sengenhoff 2a**
**D-4690 Herne 1 (DE)**
Erfinder : **Gras, Rainer, Dr.**
**Im Ostholz 49a**
**D-4630 Bochum 5 (DE)**

**EP 0 132 518 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft neue mit bekannten Blockierungsmitteln blockierte Lackpolyisocyanate mit Isocyanurat- oder Urethanstruktur auf der Basis von einem Gemisch aus 2-Methylpentandiisocyanat-1.5 und/oder 2-Ethylbutandiisocyanat-1.4 sowie 3-Isocyanatomethyl-3.5.5-trimethylcyclohexylisocyanat, ein Verfahren zur Herstellung dieser neuen Lackpolyisocyanate sowie ihre Verwendung als Isocyanatkomponente zur Herstellung von in der Hitze härtbaren Polyurethan-Pulverlacken.

Polyurethan-Pulverlacke auf Basis von partiell oder total blockierten Polyisocyanaten und hydroxylgruppenaufweisenden Polymeren, deren Erweichungspunkt oberhalb 40 °C liegt, gehören zum Stand der Technik und werden in der Literatur vielfach beschrieben, wie z. B. in den DE-A-21 05 777, 25 42 191, 27 35 497, 28 42 641, 30 04 876, 30 39 824 oder 31 28 743.

Polyurethan-Pulverlacke bestehen im wesentlichen aus einer hydroxylgruppentragenden Komponente und einem Polyisocyanat, dessen NCO-Gruppen mit einem Blockierungsmittel teilweise oder vollständig blockiert sind, so daß die OH : NCO-Polyadditionsreaktion bei Temperaturen unterhalb 140 °C nicht ablaufen kann. Erst nach dem Erhitzen auf Temperaturen ≥ 150 °C lassen sich derartige Pulverlacke innerhalb relevanter Zeit unter Freisetzen des Blockierungsmittels und Umsetzung der OHmit den NCO-Gruppen zu einem Lackfilm vernetzen.

Nicht alle Polyisocyanate sind für derartige Zwecke geeignet und im Hinblick auf die Anwendung als Pulvermaterialien gibt es nicht wenige Einschränkungen, insbesondere dann, wenn die mit den üblichen Blockierungsmitteln blockierten — partiell oder total — Polyisocyanate selbst solche Kenndaten aufweisen, die die Mahlbarkeit erschweren, so ist ihr Einsatz in Pulverlacken in hohem Maße eingeschränkt, wenn nicht gar unmöglich, selbst wenn ihre lacktechnischen sowie chemischen und physikalischen Kenndaten noch so gut sein mögen.

So sind normalerweise die Isocyanato-Isocyanurate, wie z. B. von Hexamethylendiisocyanat (kurz : HDI) flüssig, auch ihre Umsetzungsprodukte mit Blockierungsmitteln, wie in der EP-A-0 047 452, entspricht der DE-A-30 33 860, von Seite 2, Zeile 29 bis Seite 3, Zeile 6 beschrieben, und für den Einsatz in Pulverlacken nicht verwendbar. Eine Ausnahme bildet das Isocyanatoisocyanurat des 3-Isocyanatomethyl-3.5.5-trimethylcyclohexylisocyanat, auch als Isophorondiisocyanat bezeichnet, kurz IPDI genannt. Es ist fest und hat einen Schmelzbereich von 102-104 °C. Wie nun in der EP 0 047 452 weiterhin gezeigt wird, lassen sich durch Mischtrimerisierung dieser beiden Polyisocyanate (HDI/IPDI) Produkte herstellen, die in ihrer blockiertem Form, vgl. Seite 8, Zeile 16-21, für die Herstellung von Polyurethan-Pulverlacken — wenn auch nicht experimentell belegt — geeignet sind. Es besteht also die Möglichkeit, durch das eingesetzte Molverhältnis der Diisocyanate die Schmelzpunkte zu variieren. Zudem wird u. a. auch auf die verbesserte Lösungsmittelverträglichkeit und die Kälteflexibilität, vgl. Seite 3, Zeile 19-21, hingewiesen.

Weiterhin ist die Thermo- und Oxidationsstabilität für die Praxis von ausschlaggebender Bedeutung, daß hitzehärtbare Polyurethan-Einbrennlacke unter den zum Härten der Lackfilme erforderlichen Temperaturen keine Vergilbungserscheinungen zeigen, da sonst bei technischen Störungen (z. B. Bandstillstand) während des Härtungsprozesses mit mehr oder minder großen Qualitätseinbußen (Verfärbungen) zu rechnen ist. Das ist bisher nicht immer gewährleistet.

Es wurde nun überraschenderweise gefunden, daß sich entgegen aller Überlegungen bei der Verwendung eines Gemisches, bestehend aus überwiegend 2-Methylpentandiisocyanat-1.5 (MPDI) und 2-Ethylbutandiisocyanat-1.4 (EBDI) nachstehender Formeln I und II,

(I) 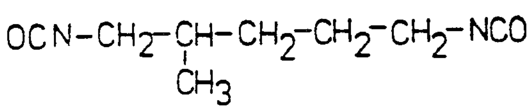 (MPDI)

(II) 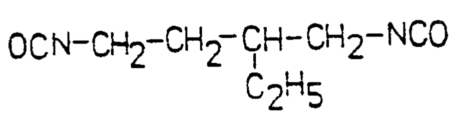 (EBDI)

welches folgende Zusammensetzung aufwies

88-99 Gew.-% 2-Methylpentandiisocyanat-1.5
12- 1 Gew.-% 2-Ethylbutandiisocyanat-1.4

in Kombination mit 3-Isocyanatomethyl-3.5.5-trimethylcyclohexylisocyanat echte Mischtrimerisate (Isocyanato-Isocyanurate) oder die Gemische der einzelnen Trimerisate oder echte Mischurethanaddukte oder die Gemische der einzelnen Urethanaddukte basierend auf der Umsetzung der Diisocyanate — MPDI/EBDI-Gemisch und IPDI- mit Diolen und/oder Triolen, insbesondere Trimethylolpropan (TMP) und

mit Blockierungsmitteln, insbesondere ε-Caprolactam oder 1H-1.2.4-Triazol blockierte Lackpolyisocyanate herstellen lassen, die aufgrund ihrer spröden, mahlbaren Form besonders als Vernetzer in Polyurethan-Pulverlacken Verwendung finden.

Das Verhältnis der zur Trimerisierung oder Urethanadduktbildung eingesetzten Diisocyanate, MPDI/EBDI-Gemisch zu IPDI beträgt zwischen 90 und 10 bzw. 10 und 90 Gew.-%, vorzugsweise zwischen 75 und 25 bzw. 25 und 75 Gew.-%.

Die erfindungsgemäßen Vernetzer weisen einen latenten NCO-Gehalt von 7-18 Gew.-%, vorzugsweise von 9-15 Gew.-% und einen freien NCO-Gehalt von $\leq$ 3 Gew.-%, vorzugsweise $\leq$ 2 Gew.-% auf.

Gegenstand der vorliegenden Erfindung ist daher ein als Pulverlack bzw. Bindemittel für Pulverlacke geeignetes Stoffgemisch bestehend im wesentlichen aus:

a) einer Isocyanatkomponente mit partiell oder total blockierten Isocyanatgruppen,
b) einer Polyhydroxylkomponente und
c) gegebenenfalls den üblichen Hilfs- und Zusatzstoffen,

dadurch gekennzeichnet, daß als Isocyanatkomponente echte Mischtrimerisate bzw. Gemische der einzelnen Trimerisate aus einem Gemisch bestehend aus überwiegend 2-Methylpentandiisocyanat-1.5 (MPDI) und 2-Ethylbutandiisocyanat-1.4 (EBDI) nachstehender Formeln I und II

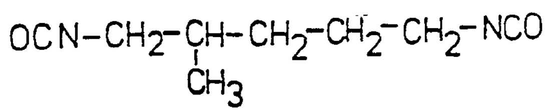

(MPDI)

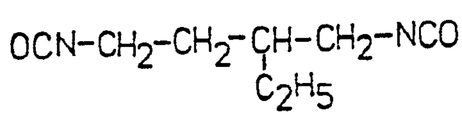

(EBDI)

welches folgende Zusammensetzung aufweist:

88-99 Gew.-% 2-Methylpentandiisocyanat-1.5
12- 1 Gew.-% 2-Ethylbutandiisocyanat-1.4

in Kombination mit 3-Isocyanatomethyl-3.5.5-trimethylcyclohexylisocyanat (IPDI) oder echte Mischurethanaddukte bzw. die Gemische der einzelnen Urethanaddukte aus der Umsetzung des MPDI/EBDI-Gemisches in Kombination mit IPDI mit Diolen und/oder Triolen zum Einsatz gelangen.

Die hydroxylgruppentragenden Polymere sind Epoxidharze, Acrylate und insbesondere Polyester auf der Basis von überwiegend aromatischen Dicarbonsäuren, Diolen und Triolen in Polyurethan-Pulverlacken.

Ein weiterer Gegenstand der Erfindung ist die Verwendung der Stoffgemische als Pulverlacke bzw. als Bindemittel für Pulverlacke zum Beschichten beliebiger hitzehärtbarer Substrate nach an sich bekannten, für die Verarbeitung von Pulverlakken geeigneten Beschichtungsmethoden.

Die erfindungsgemäßen blockierten Polyisocyanate und die hydroxylgruppentragenden Polymere werden gegebenenfalls unter Zumischung der in der PUR-Chemie üblichen Zusätze mit bekannten Technologien zu sprühfertigen Pulvern formuliert, mittels elektrostatischen Auftrag appliziert und zwischen 140° und 250 °C, vorzugsweise 160° und 200 °C eingebrannt.

Das Mischungsverhältnis läßt sich in weiten Grenzen variieren. Die besten lacktechnischen Kenndaten werden erhalten, wenn das Bindemittelverhältnis aus 9-45 Gew.-% Vernetzer und 55-91 Gew.-% Polyester besteht, wobei das OH/NCO-Verhältnis von 1 : 0,8-1 : 1,2, vorzugsweise 1 : 0,95-1 : 1,1 eingestellt werden kann. Besonders empfehlenswert ist, pro OH-Äquivalent der Polyhydroxylverbindung ein Äquivalent NCO des Vernetzers einzusetzen.

Die Herstellung der Trimerisate aus dem Gemisch aus MPDI/EBDI und IPDI in den genannten Verhältnissen erfolgte in bekannter Weise nach den Angaben der GB-A-1 391 066, DE-A-23 25 826, 26 44 684 oder 29 16 201. Die Verfahrensprodukte bestehen aus Isocyanatoisocyanurat mit gegebenenfalls höheren Oligomeren und weisen einen NCO-Gehalt von 14-22 Gew.-% vorzugsweise 15,0-20,5 Gew.-% auf, der durch das Blockieren mit an sich bekannten Blockierungsmitteln, insbesondere ε-Caprolactam oder 1H-1.2.4-Triazol auf einer NCO-Gehalt von $\leq$ 3 Gew.-%, vorzugsweise $\leq$ 2 Gew.-% herabgesetzt wird.

Die Trimerisierung kann in Substanz oder in inertem organischen Lösungsmittel vorgenommen werden. Die katalytische Reaktion sollte abgebrochen werden, sobald der NCO-Gehalt der Mischung erkennen läßt, daß 30-50 % der NCO-Gruppen sich umgesetzt haben. Das nicht umgesetzte Diisocyanat wird anschließend gemeinsam mit dem Katalysator und gegebenenfalls mit dem Lösungsmittel abgetrennt.

Die Verfahrensprodukte können auch auf der Umsetzung der angegebenen Diisocyanat-(MPDI/EBDI-Gemisch zu IPDI)-Verhältnisse in Kombination mit Diolen und/oder Triolen, insbesondere mit Trimethylolpropan (TMP) beruhen. Sie weisen einen NCO-Gehalt vor der Umsetzung mit Blockierungsmitteln von 11-19 Gew.-%, vorzugsweise von 13-17 Gew.-% und nach der Blockierung von ≤ 3 Gew.-%, vorzugsweise ≤ 2 Gew.-% auf. Die Reaktionspartner werden dabei vorzugsweise in solchen Verhältnissen umgesetzt, daß pro OH-Gruppe eine NCO-Gruppe zur Reaktion gelangt.

Zur Durchführung der Blockierungsreaktion wird die Isocyanatkomponente vorgelegt und das Blockierungsmittel portionsweise zugegeben. Die Umsetzung erfolgt bei Temperaturen unterhalb der Aufspalttemperatur bei 90-130 °C. Auch können für die Isocyanat-Polyadditionsreaktion die in der PUR-Chemie üblichen Katalysatoren zugesetzt werden in einer Menge von 0,001-1 Gew.-% bezogen auf das Gesamtgemisch.

Geeignete Blockierungsmittel sind beispielsweise Phenole, Alkohole, Acetessigsäureethylester, Lactame, insbesondere ε-Caprolactam sowie Triazole, insbesondere das dem Schmelzpunkt erhöhende 1H-1.2.4-Triazol.

Die erfindungsgemäßen Verfahrensprodukte werden bei ihrer Verwendung als Vernetzer für Polyurethan-Pulverlacke mit den üblichen Harzen für Pulverlacke auf Polyurethanbasis, d. h. vorzugsweise mit hydroxylgruppenhaltigen Harzen kombiniert.

Als hydroxylgruppenhaltige Harze kommen insbesondere Polyester, Epoxidharze sowie hydroxylgruppenhaltige Acrylate mit einem Molekulargewicht von 800-10 000, vorzugsweise 1 200-5 000, einer Hydroxylzahl von 20-150 mgKOH/g vorzugsweise 30-100 mgKOH/g und Schmelzpunkten oberhalb 60 °C, vorzugsweise zwischen 70 °C und 100 °C in Betracht.

Für die Herstellung von Pulverlacken eignen sich bevorzugt die Polyester der Terephthalsäure mit den Alkoholen Hexandiol-1.6, Neopentylglykol, 1.4-Dimethanolcyclohexan und 2.2.2-Trimethylolpropan.

Die einsetzbaren Epoxidharze sind in der DE-A-29 45 113, Seite 12, Zeile 1 bis Seite 13, Zeile 26 aufgeführt. Geeignete Polyacrylate werden in der DE-A-30 30 539, Seite 14, Zeile 21 bis Seite 15, Zeile 26 beschrieben.

Die hydroxylgruppenhaltigen Harze werden in solchen Mengen eingesetzt, daß das OH/NCO-Verhältnis 1 : 0,8-1 : 1,2, vorzugsweise 1 : 0,95 bis 1 : 1,1 beträgt. Beim Einsatz von Epoxiden empfiehlt sich ein OH/NCO-Verhältnis von 1 : 0,25-1 : 0,75, vorzugsweise 1 : 0,35 bis 1 : 0,55.

Zu den üblichen Hilfs- und Zusatzstoffen zählt man Verlaufmittel, Pigmente, Farbstoffe, Füllstoffe, Katalysatoren, Thixotropiermittel, UV- und Oxidationsstabilisatoren. Die Menge dieser Stoffe kann, bezogen auf die Menge des festen Bindemittels, innerhalb eines weiten Bereichs schwanken.

Die Herstellung der pulverförmigen Überzugsmittel erfolgt z. B. indem man die festen Harze, Polyester und/oder Epoxidharz und/oder Acrylatharz und die blockierten Polyisocyanate, gegebenenfalls in Kombination mit den erforderlichen Zusätzen, in den genannten Mengenverhältnissen mischt und bei erhöhter Temperatur extrudiert. Diese Temperatur muß oberhalb des Schmelzpunktes von Polyester/Epoxid/Acrylat oder blockierten Polyisocyanat, oder unterhalb der Aufspalttemperatur der Vernetzer liegen.

Nach dem Extrudieren wird abgekühlt und auf eine Korngröße kleiner als 0,25 mm, vorzugsweise < 100 μm gemahlen. Anschließend werden gegebenenfalls die größeren Fraktionen durch Siebung entfernt und zur Mühle zurückgeführt.

Die Applikation des sprühfertigen Pulvers auf die zu überziehenden Körper kann nach bekannten Methoden erfolgen, z. B. durch elektrostatisches Pulverspritzen oder elektrostatisches Wirbelsintern. Anschließend werden die lackierten Gegenstände 60 Minuten bis 1 Minute im Temperaturbereich von 140° bis 250 °C, vorzugsweise 30 bis 8 Minuten zwischen 160° und 200 °C eingebrannt.

Zur Beschichtung mit dem erfindungsgemäßen pulverförmigen Überzugsmitteln eignen sich alle Substrate, die die angegebenen Härtungsbedingungen ohne Einbuße der mechanischen Eigenschaften vertragen, z. B. Metalle, Glas, Keramik oder Kunststoff.

Die erhaltenen Polyurethan-Pulverlacke zeichnen sich gegenüber den bekannten durch ein verbessertes Verhalten gegenüber Hitze, UV und chemischen Einflüssen aus.

## Experimenteller Teil

### A) Herstellung der blockierten Lackpolyisocyanate

#### Beispiel 1

444 Gew.-T. IPDI und 336 Gew.-T. MPDI/EBDI-Gemisch (94 : 6) und 0,15 Gew.-T. Katalysator (Triethylendiamin/Propylenoxid 1 : 1) wurden unter intensivem Rühren miteinander bei 80 °C gemischt. Dabei trat sofort eine Wärmetönung auf, wobei die Temperatur des Reaktionsgemisches auf ca. 95 °C anstieg. Bei dieser Temperatur wurde das Reaktionsgemisch nach ca. 30 Minuten erhitzt. Während dieser Zeit fiel der NCO-Gehalt auf 30,2 Gew.-%. Zur Entfernung der nicht umgesetzten monomeren Diisocyanate wurde das Reaktionsgemisch in einem Dünnschichtverdampfer destilliert. Das Reaktionsprodukt-(Isocyanatoisocyanurat-Rückstand der Dünnschichtverdampfung)-hatte einen NCO-Gehalt von 18,5 Gew.-% ; der Monomergehalt lag < 0,7 Gew.-%.

Die Blockierung von 500 Gew.-T. Isocyanatoisocyanurat mit 249,3 Gew.-T. ε-Caprolactam bei 90-130 °C führt zu einem spröden, mahlbaren Addukt mit einem Schmelzbereich von 89-93 °C. Der freie NCO-Gehalt lag bei < 0,8 Gew.-% und der praktische latente NCO-Gehalt bei 12,3 Gew.-%.

Tabelle 1 gibt einen Überblick über Zusammensetzung, physikalische und chemische Eigenschaften weiterer blockierter Isocyanatoisocyanurate.

| Beispiel | Diisocyanate | | | NCO-Geh. Gew.-% | * ε-Caprolactam | 1H-1.2.4-Triazol | NCO-Gehalt-latent/Gew.-%. | Schmelzbereich °C |
|---|---|---|---|---|---|---|---|---|
| | IPDI | MPDI/EBDI Gemisch | HDI | | | | | |
| 2 | 532,8 | 268,8 | - | 13,9 | 37,5 | - | 10,1 | 95-99 |
| 3 | 355,2 | 403,2 | - | 15,9 | 42,9 | - | 11,1 | 78-82 |
| 4 | 832,5 | 210 | - | 17,6 | 47,4 | - | 11,9 | 116-118 |
| 5 | 277,5 | 630 | - | 17,1 | 46,1 | - | 11,7 | 72-75 |
| 6 Vergleich | 444 | - | 336 | 17,5 | 47,2 | - | 11,9 | 74-79 |
| 7 Vergleich | 832,5 | - | 210 | 17,4 | 46,9 | - | 11,8 | 100-102 |
| 8 | 444 | 336 | - | 18,0 | - | 29,6 | 13,9 | 92-97 |
| 9 Vergleich | 444 | - | 336 | 17,5 | - | 28,8 | 13,6 | 82-86 |
| 10 Vergleich | - | 1000 | - | 19,2 | 51,8 | - | 12,3 | 58-61 |

Bemerkungen :

* ε-Caprolactameinwaage ist bezogen auf 100 Gew.-T. Isocyanatoisocyanurat. Die Mengenangaben bedeuten Gew.-T. Der Monomergehalt nach der Dünnschichtdestillation lag < 0,7 Gew.-%.

Beispiel 11 — Vergleich

100 Gew.-T. IPDI-Isocyanurat (IPDI-T 1890 Verkaufsprodukt der Chem. Werke Hüls) mit einem NCO-Gehalt von 17,5 Gew.-% und 100 Gew.-T. MPDI/EBDI-Trimerisat werden bei 100-110 °C homogenisiert. Der NCO-Gehalt der Schmelze betrug 18,1 Gew.-%. Nach der Blockierung mit der stöchiometrischen Menge ε-Caprolactam wurde ein festes, gut mahlbares Produkt mit einem praktischen, latenten NCO-Gehalt von 12,0 Gew.-% und einem Schmelzpunkt von 78-83 °C erhalten.

Beispiel 12 — Vergleich

Gemäß Beispiel 11 wurden gleiche Teile IPDI-T 1890 und HDI-Trimerisat in der Schmelze homogenisiert und anschließend mit ε-Caprolactam blockiert. Das Festprodukt wies einen latenten NCO-Gehalt von 11,9 Gew.-% und einen Schmelzbereich von 66-72 °C auf.

Beispiel 13

Zu einem Gemisch aus 666 Gew.-T. IPDI und 502 Gew.-T. MPDI/EBDI-Gemisch wurden bei 80 °C unter heftigem Rühren 134 Gew.-T. Trimethylolpropan zugesetzt. Nach der Zugabe wurde das Reaktionsgemisch noch 1 h bei 100 °C erhitzt und anschließend das nicht umgesetzte Diisocyanat durch Dünnschichtdestillation bei 160 °C/0,1 Torr entfernt. Das Verfahrensprodukt (Rückstand) hatte einen NCO-Gehalt von 17,2 Gew.-% ; der Monomergehalt lag < 0,6 Gew.-%.

Die Blockierung mit der stöchiometrischen Menge ε-Caprolactam führt zu einem spröden, mahlbaren Produkt mit einem praktischen latenten NCO-Gehalt von 11,8 Gew.-% und einem Schmelzbereich von 74-76 °C.

Tabelle 2 gibt einen Überblick über Zusammensetzung, chemische und physikalische Eigenschaften weiterer blockierter Urethanaddukte.

| Beisp. | Diisocyanate | | | NCO-Geh. Gew.-% | ε-Caprolactam* | NCO-Geh.-latent-Gew.-% | Schmelzbereich °C |
|---|---|---|---|---|---|---|---|
| | IPDI | MPDI/EBDI | HDI | | | | |
| 14 | 999 | 252 | - | 16,2 | 43,6 | 11,3 | 98 - 104 |
| 15 | 333 | 756 | - | 18,2 | 48,9 | 12,2 | 62 - 68 |
| 16 Vergl. | 666 | - | 502 | 17,1 | 46,1 | 11,7 | 65 - 68 |
| 17 Vergl. | 999 | - | 252 | 16,0 | 43,1 | 11,2 | 85 - 93 |

Bemerkung :
* ε-Caprolactameinwaage ist bezogen auf 100 Gew.-T. Addukt ; die Mengenangaben erfolgen in Gew.-T. ; der Monomergehalt der Addukte lag < 0,7 Gew.-%.

Beispiel 18 — Vergleich

Gemäß Beispiel 13 wurden 1 344 Gew.-T. MPDI/EBDI-Gemisch und 134 Gew.-T. TMP zur Reaktion gebracht. Das isolierte TMP-Addukt hatte einen NCO-Gehalt von 17,7 Gew.-%. Nach der Blockierung mit der stöchiometrischen Menge ε-Caprolactam entstand ein Festprodukt mit einem latenten NCO-Gehalt von 12 Gew.-% und einem Schmelzbereich von 42-46 °C. Der gemahlene Vernetzer backte bereits nach kurzer Zeit zusammen und konnte damit in Pulverlacken nicht eingesetzt werden.

Beispiel 19 — Vergleich

Das gemäß Beispiel 13 hergestellte Urethanaddukt auf HDI-Basis war nach der Blockierung mit ε-Caprolactam bei Raumtemperatur weich und klebrig.

Beispiel 20 — Vergleich

Werden gemäß der Beispiele 11 und 12 die einzelnen Urethan-Addukte in der Schmelze homogenisiert und anschließend entsprechend blockiert, so werden Festprodukte isoliert, deren Schmelzpunkte im Vergleich zu den « echten » Urethanaddukten etwa 10 °C niedriger liegen.

B) Polyolkomponente

Allgemeine Herstellungsvorschrift

Die Ausgangskomponenten — Terephthalsäure (Ts), Dimethylterephthalat (DMT), Hexandiol-1.6 (HD), Neopentylglykol (NPG), 1.4-Dimethylolcyclohexan (DMC) und Trimethylolpropan (TMP) — wurden in einen Reaktor gegeben und mit Hilfe eines Ölbades erwärmt. Nachdem die Stoffe zum größten Teil aufgeschmolzen waren, wurden bei einer Temperatur von 160 °C 0,05 Gew.-% Di-n-butylzinnoxid als Katalysator zugesetzt. Die erste Methanolabspaltung trat bei einer Temperatur von ca. 170 °C auf. Innerhalb 6-8 Stunden wurde die Temperatur auf 220°-230 °C erhöht und innerhalb weiterer 12 Stunden die Reaktion zu Ende geführt. Der Polyester wurde auf 200 °C abgekühlt und durch Anlegen von Vakuum (1 mm Hg) innerhalb 30-45 Minuten weitgehend von flüchtigen Anteilen befreit. Während der gesamten Reaktionszeit wurde das Sumpfprodukt gerührt und ein schwacher $N_2$-Strom durch das Reaktionsgemisch geleitet.

Folgende Tabelle gibt Polyesterzusammensetzungen und die entsprechenden physikalischen und chemischen Kenndaten wieder

| | Beispiele | 1 | 2 | 3 |
|---|---|---|---|---|
| Ausgangskomponenten | Ts Mol | 9 | 6 | 8 |
| | DMT Mol | 9 | 6 | 7 |
| | HD Mol | 3 | 4 | 3 |
| | NPG Mol | 13 | 5 | 10 |
| | DMC Mol | 3 | 3 | 2 |
| | TMP Mol | 1 | 1 | 1 |
| chem. u. phys. Kenndaten | OH-Zahl mgKOH/g | 50 - 56 | 48 - 52 | 32 - 36 |
| | Säurezahl mgKOH/g | 3 - 4 | 3 - 4 | 3 - 4 |
| | Schmelzpunkt °C | ca. 70 | ca. 80 | ca. 85 |
| | Glasumwandlungstemp. (DTA) °C | ca. 50 | ca. 55 | ca. 60 |
| | Viskosität b. 160 °C mPa·s | ~ 10000 | ~ 15000 | ~ 40000 |

C) Polyurethan-Pulverlacke

Allgemeine Herstellungsvorschrift

Die gemahlenen Produkte, Vernetzer, Polyester, Verlaufmittel*-Masterbatch werden gegebenenfalls mit dem Weißpigment und gegebenenfalls Füllstoffen in einem Kollergang innig vermischt und anschließend im Extruder bei 100-130 °C homogenisiert. Nach dem Erkalten wird das Extrudat gebrochen und mit einer Stiftmühle auf eine Korngröße < 100 µm gemahlen. Das so hergestellte Pulver wird mit einer elektrostatischen Pulverspritzanlage bei 60 KV auf entfettete, gegebenenfalls vorbehandelte Eisenbleche appliziert und in einem Umlufttrockenschrank bei Temperaturen zwischen 160° und 200 °C eingebrannt.

* Verlaufmittel-Masterbatch :

Es werden 10 Gew.-% des Verlaufmittels — ein handelsübliches Copolymeres von Butylacrylat und 2-Ethylhexylacrylat — in dem entsprechenden Polyester in der Schmelze homogenisiert und nach dem Erstarren zerkleinert.

Die Abkürzungen in den folgenden Tabellen bedeuten :
SD = Schichtdicke in µm
HK = Härte n. König in sec (DIN 53 157)
HB = Härte n. Buchholz (DIN 53 153)
ET = Tiefung n. Erichsen in mm (DIN 53 156)
GS = Gitterschnittprüfung (DIN 53 151)
GG 60° = Messung des Glanzes n. Gardner (ASTM-D 523)
Imp. rev. = Impact reverse in inch.lb

Beispiel 1

Pigmentierter Lack

Nach dem beschriebenen Verfahren wurde der Pulverlack mit folgender Rezeptur hergestellt, appliziert und zwischen 160° und 200 °C eingebrannt.

432,2 Gew.-T. Polyester gemäß Beispiel B1
171,0 Gew.-T. Vernetzer gemäß Beispiel A1
438,7 Gew.-T. Weißpigment ($TiO_2$)
54,8 Gew.-T. Verlaufmittel-Masterbatch

| Einbrenn-bedingung. | Mechanische Kenndaten | | | | | | |
|---|---|---|---|---|---|---|---|
| Zeit/Temp. min/ °C | SD | HK | HB | ET | GS | Imp. rev. | GG 60° |
| 6/200 | 60–70 | 182 | 111 | 9,6 - 10 | 0 | 60 | 88 |
| 8/200 | 70 | 184 | 125 | > 10 | 0 | >82 | 90 |
| 10/200 | 60–70 | 183 | 125 | > 10 | 0 | >82 | 90 |
| 15/180 | 60–70 | 180 | 125 | > 10 | 0 | >82 | 86 |
| 20/180 | 65–75 | 179 | 125 | > 10 | 0 | >82 | 87 |
| 25/180 | 70 | 179 | 125 | > 10 | 0 | >82 | 90 |
| 25/170 | 60–75 | 180 | 111 | 9,2 - 9,8 | 0 | 50 | 89 |
| 30/170 | 55–70 | 179 | 125 | > 10 | 0 | 70 | 90 |
| 35/160 | 70–80 | 181 | 111 | 8,7 - 9,1 | 0 | 50 | 90 |

Beispiel 2

Pigmentierter Lack

Nach dem beschriebenen Verfahren wurde der Pulverlack mit folgender Rezeptur hergestellt, appliziert und zwischen 160° und 200 °C eingebrannt.

493,4 Gew.-T. Polyester gemäß Beispiel B2
166,6 Gew.-T. Vernetzer gemäß Beispiel A1
480,0 Gew.-T. Weißpigment ($TiO_2$)
60,0 Gew.-T. Verlaufmittel-Masterbatch

| Einbrenn-bedingung. | Mechanische Kenndaten | | | | | | |
|---|---|---|---|---|---|---|---|
| Zeit/Temp. min/ °C | SD | HK | HB | ET | GS | Imp. rev. | GG 60°% |
| 6/200 | 60-75 | 181 | 100 | 9,2-9,9 | 0 | 60 | 88 |
| 8/200 | 70-80 | 184 | 111 | 9,6-10,2 | 0 | > 82 | 90 |
| 10/200 | 70 | 182 | 111 | > 10 | 0 | > 82 | 91 |
| 15/180 | 70 | 180 | 111 | 9,7-10,4 | 0 | > 82 | 89 |
| 20/180 | 70-80 | 179 | 125 | > 10 | 0 | 70 | 89 |
| 25/180 | 65-80 | 183 | 111 | > 10 | 0 | > 82 | 88 |
| 25/170 | 75-80 | 182 | 111 | 9,0-9,5 | 0 | 60 | 89 |
| 30/170 | 70 | 179 | 111 | > 10 | 0 | 70 | 87 |
| 35/160 | 70-80 | 180 | 111 | 8,1-9,1 | 0 | 50 | 88 |

Beispiel 3

Pigmentierter Lack

Nach dem beschriebenen Verfahren wurde der Pulverlack mit folgender Rezeptur hergestellt, appliziert und zwischen 160° und 200 °C eingebrannt.

534,6 Gew.-T. Polyester gemäß Beispiel B3
125,4 Gew.-T. Vernetzer gemäß Beispiel A1
480,0 Gew.-T. Weißpigment ($TiO_2$)
60,0 Gew.-T. Verlaufmittel-Masterbatch

| Einbrenn-bedingung. | Mechanische Kenndaten | | | | | | |
|---|---|---|---|---|---|---|---|
| Zeit/Temp. min/ °C | SD | HK | HB | ET | GS | Imp. rev. | GG 60°% |
| 6/200 | 80 | 171 | 100 | 8,4 - 8,7 | 0 | 60 | 68 |
| 8/200 | 70-80 | 170 | 100 | 8,1 - 8,9 | 0 | 70 | 71 |
| 10/200 | 60-70 | 172 | 111 | 8,8 - 9,4 | 0 | 60 | 67 |
| 15/180 | 65-80 | 168 | 100 | 7,9 - 8,1 | 0 | 50 | 70 |
| 20/180 | 70-80 | 171 | 100 | 8,4 - 8,8 | 0 | 70 | 70 |
| 25/180 | 70-90 | 169 | 100 | 9,2 - 9,4 | 0 | 70 | 68 |
| 25/170 | 85 | 170 | 100 | 6,7 - 7,4 | 0 | 60 | 68 |
| 30/170 | 80 | 171 | 111 | 7,5 - 8,2 | 0 | 60 | 70 |
| 35/160 | 70-85 | 170 | 100 | 5,9 - 6,2 | 0 | 30 | 71 |

Beispiel 4

Pigmentierter Lack

Nach dem beschriebenen Verfahren wurde der Pulverlack mit folgender Rezeptur hergestellt, appliziert und zwischen 160 °C und 200 °C eingebrannt.

368,8 Gew.-T. Polyester gemäß Beispiel B1
181,2 Gew.-T. Vernetzer gemäß Beispiel A2
400,0 Gew.-T. Weißpigment ($TiO_2$)
50,0 Gew.-T. Verlaufmittel-Masterbatch

| Einbrenn-bedingung. | Mechanische Kenndaten | | | | | | |
|---|---|---|---|---|---|---|---|
| Zeit/Temp. min/ °C | SD | HK | HB | ET | GS | Imp. rev. | GG 60° |
| 6/200 | 80-90 | 190 | 100 | 9,1 - 9,5 | 0 | 60 | 84 |
| 8/200 | 70-80 | 194 | 100 | 9,9 -10,2 | 0 | > 82 | 83 |
| 10/200 | 80-90 | 189 | 111 | > 10 | 0 | > 82 | 86 |
| 15/180 | 75-85 | 186 | 100 | 9,0 - 9,2 | 0 | 40 | 82 |
| 20/180 | 70-85 | 190 | 100 | 9,7 -10,1 | 0 | 70 | 87 |
| 25/180 | 80-90 | 190 | 111 | > 10 | 0 | > 82 | 83 |
| 25/170 | 70-90 | 188 | 100 | 8,7 - 9,1 | 0 | 50 | 84 |
| 30/170 | 80-90 | 190 | 100 | 9,4 - 9,9 | 0 | 70 | 84 |
| 35/160 | 70-80 | 189 | 100 | 8,1 - 9,0 | 0 | 50 | 86 |

Beispiel 5

Pigmentierter Lack

Nach dem beschriebenen Verfahren wurde der Pulverlack mit folgender Rezeptur hergestellt, appliziert und zwischen 160° und 200 °C eingebrannt.

381,2 Gew.-T. Polyester gemäß Beispiel B1
168,8 Gew.-T. Vernetzer gemäß Beispiel A3
400,0 Gew.-T. Weißpigment ($TiO_2$)
50,0 Gew.-T. Verlaufmittel-Masterbatch

| Einbrenn-bedingung. | Mechanische Kenndaten | | | | | | |
|---|---|---|---|---|---|---|---|
| Zeit/Temp. min/ °C | SD | HK | HB | ET | GS | Imp. rev. | GG 60° |
| 6/200 | 70-80 | 183 | 100 | 9,4 - 9,7 | 0 | 70 | 86 |
| 8/200 | 70-75 | 186 | 100 | 9,8 -10,4 | 0 | > 82 | 89 |
| 10/200 | 75-85 | 186 | 100 | > 10 | 0 | > 82 | 90 |

Tabelle (Fortsetzung)

| Einbrenn-bedingung. | Mechanische Kenndaten | | | | | | |
|---|---|---|---|---|---|---|---|
| 15/180 | 80 | 187 | 100 | 8,9 - 9,6 | 0 | 50 | 89 |
| 20/180 | 70–80 | 190 | 100 | 9,4 - 10 | 0 | 70 | 87 |
| 25/180 | 65–70 | 187 | 100 | > 10 | 0 | > 82 | 89 |
| 25/170 | 70–80 | 184 | 100 | 8,5 - 9,1 | 0 | 40 | 90 |
| 30/170 | 70 | 188 | 100 | 9,0 - 9,4 | 0 | 70 | 88 |
| 35/160 | 70–85 | 186 | 100 | 8,0 - 8,4 | 0 | 50 | 89 |

Beispiel 6

Pigmentierter Lack

Nach dem beschriebenen Verfahren wurde der Pulverlack mit folgender Rezeptur hergestellt, appliziert und zwischen 160° und 200 °C eingebrannt.

389,9 Gew.-T. Polyester gemäß Beispiel B1
160,1 Gew.-T. Vernetzer gemäß Beispiel A4
400,0 Gew.-T. Weißpigment ($TiO_2$)
50,0 Gew.-T. Verlaufmittel-Masterbatch

| Einbrenn-bedingung. | Mechanische Kenndaten | | | | | | |
|---|---|---|---|---|---|---|---|
| Zeit/Temp. min/°C | SD | HK | HB | ET | GS | Imp. rev. | GG 60° |
| 6/200 | 70–80 | 177 | 100 | 9,1 - 9,5 | 0 | > 82 | 85 |
| 8/200 | 70–80 | 181 | 111 | 9,3 - 10 | 0 | 70 | 88 |
| 10/200 | 70 | 180 | 100 | > 10 | 0 | > 82 | 84 |
| 15/180 | 60–70 | 182 | 100 | 8,9 - 9,1 | 0 | 60 | 82 |
| 20/180 | 70 | 179 | 100 | 8,9 - 9,6 | 0 | 70 | 87 |
| 25/180 | 70–80 | 181 | 111 | 9,7 - 9,9 | 0 | 60 | 83 |
| 25/170 | 80 | 178 | 100 | 7,9 - 8,1 | 0 | 50 | 85 |
| 30/170 | 60–70 | 180 | 111 | 8,4 - 8,8 | 0 | 70 | 85 |
| 35/160 | 60–70 | 177 | 100 | 7,2 - 8,1 | 0 | 40 | 87 |

Beispiel 7

Pigmentierter Lack

Nach dem beschriebenen Verfahren wurde der Pulverlack mit folgender Rezeptur hergestellt, appliziert und zwischen 160° und 200 °C eingebrannt.

373 Gew.-T. Polyester gemäß Beispiel B3
100 Gew.-T. Vernetzer gemäß Beispiel A5
344 Gew.-T. Weißpigment ($TiO_2$)
43 Gew.-T. Verlaufmittel-Masterbatch

| Einbrenn-bedingung. | Mechanische Kenndaten | | | | | | |
|---|---|---|---|---|---|---|---|
| Zeit/Temp. min/ °C | SD | HK | HB | ET | GS | Imp. rev. | GG 60° ∢ |
| 6/200 | 80-90 | 169 | 100 | 8,0 - 8,5 | 0 | 60 | 68 |
| 8/200 | 85-95 | 164 | 100 | 8,2 - 8,9 | 0 | > 82 | 70 |
| 10/200 | 70-80 | 170 | 100 | 8,6 - 9,3 | 0 | > 82 | 71 |
| 15/180 | 70 | 168 | 100 | 9,2 - 9,6 | 0 | > 82 | 66 |
| 20/160 | 60-80 | 170 | 100 | 8,8 - 9,7 | 0 | > 82 | 68 |
| 25/180 | 70 | 172 | 100 | 8,6 - 9,5 | 0 | > 82 | 65 |
| 25/170 | 70-80 | 168 | 100 | 7,3 - 7,9 | 0 | 60 | 69 |
| 30/170 | 80-90 | 167 | 100 | 8,1 - 8,8 | 0 | 70 | 70 |
| 35/160 | 90 | 170 | 100 | 6,6 - 7,5 | 0 | 40 | 70 |

Beispiel 8 — Vergleich

Pigmentierter Lack

Nach dem beschriebenen Verfahren wurde der Pulverlack mit folgender Rezeptur hergestellt, appliziert und zwischen 160° und 200 °C eingebrannt.

389,9 Gew.-T. Polyester gemäß Beispiel B1
160,1 Gew.-T. Vernetzer gemäß Beispiel A6
400,0 Gew.-T. Weißpigment ($TiO_2$)
50,0 Gew.-T. Verlaufmittel-Masterbatch

Das sprühfertige Pulver weist eine geringere Lagerstabilität auf und die Lackfilme führen unter Thermobelastung zur größeren Vergilbung.

(Siehe Tabelle Seite 13 f.)

| Einbrenn-bedingung. | Mechanische Kenndaten | | | | | | |
|---|---|---|---|---|---|---|---|
| Zeit/Temp. min/ °C | SD | HK | HB | ET | GS | Imp. rev. | GG 60° |
| 6/200 | 70-80 | 172 | 100 | 8,9 - 9,3 | 0 | 60 | 84 |
| 8/200 | 70-90 | 174 | 100 | 9,0 - 9,8 | 0 | > 82 | 86 |
| 10/200 | 70 | 176 | 100 | 9,7 - 10 | 0 | > 82 | 83 |
| 15/180 | 70 | 175 | 100 | 8,7 - 9,3 | 0 | > 82 | 82 |
| 20/180 | 70-80 | 177 | 111 | > 10 | 0 | > 82 | 87 |
| 25/180 | 70 | 177 | 100 | 9,8 - 10 | 0 | > 82 | 84 |
| 25/170 | 60-70 | 174 | 100 | 8,1 - 8,4 | 0 | 50 | 83 |
| 30/170 | 65-75 | 173 | 111 | 8,6 - 9,1 | 0 | 70 | 86 |
| 35/160 | 70-80 | 172 | 100 | 8,4 - 8,9 | 0 | 50 | 85 |

Beispiel 9 — Vergleich

Pigmentierter Lack

Nach dem beschriebenen Verfahren wurde der Pulverlack mit folgender Rezeptur hergestellt, appliziert und zwischen 160° und 200 °C eingebrannt.

388 Gew.-T. Polyester gemäß Beispiel B1
162 Gew.-T. Vernetzer gemäß Beispiel A7
400 Gew.-T. Weißpigment ($TiO_2$)
50 Gew.-T. Verlaufmittel-Masterbatch

Neben einer größeren thermooxidativen Instabilität wurde auch nach der Behandlung im UV-Licht eine größere Kreidungsanfälligkeit registriert.

| Einbrenn-bedingung. | Mechanische Kenndaten | | | | | | |
|---|---|---|---|---|---|---|---|
| Zeit/Temp. min/ °C | SD | HK | HB | ET | GS | Imp. rev. | GG 60° |
| 6/200 | 80 | 172 | 100 | 7,9 - 8,2 | 0 | 50 | 75 |
| 8/200 | 60-75 | 175 | 100 | 8,0 - 8,4 | 0 | 70 | 75 |
| 10/200 | 70-80 | 176 | 100 | 8,6 - 9,1 | 0 | > 82 | 76 |
| 15/180 | 70 | 177 | 111 | 7,5 - 8,3 | 0 | 60 | 77 |
| 20/180 | 75-90 | 173 | 100 | 7,9 - 8,1 | 0 | 70 | 76 |
| 25/180 | 70 | 170 | 111 | 8,2 - 8,6 | 0 | 60 | 77 |
| 25/170 | 60-70 | 172 | 100 | 7,0 - 7,2 | 0 | 40 | 75 |
| 30/170 | 60-70 | 174 | 100 | 7,5 - 8,1 | 0 | 60 | 77 |
| 35/160 | 70-80 | 170 | 100 | 6,1 - 6,4 | 0 | 30 | 76 |

Beispiel 10

Pigmentierter Lack

Nach dem beschriebenen Verfahren wurde der Pulverlack mit folgender Rezeptur hergestellt, appliziert und zwisdhen 160° und 200 °C eingebrannt.

488,9 Gew.-T. Polyester gemäß B1
171,1 Gew.-T. Vernetzer gemäß Beispiel A8
480,0 Gew.-T. Weißpigment ($TiO_2$)
60,0 Gew.-T. Verlaufmittel-Masterbatch

| Einbrenn-bedingung. | Mechanische Kenndaten | | | | | | |
|---|---|---|---|---|---|---|---|
| Zeit/Temp. min/ °C | SD | HK | HB | ET | GS | Imp. rev. | GG 60° |
| 6/200 | 70-80 | 187 | 100 | 9,1 - 9,6 | 0 | 60 | 88 |
| 8/200 | 60-75 | 186 | 100 | 9,4 -10,1 | 0 | > 82 | 90 |
| 10/200 | 65-70 | 182 | 100 | > 10 | 0 | 70 | 86 |
| 15/180 | 70 | 188 | 111 | 8,8 - 9,4 | 0 | 70 | 86 |
| 20/180 | 70-80 | 188 | 111 | 9,7 | 0 | > 82 | 88 |
| 25/180 | 80 | 186 | 100 | > 10 | 0 | > 82 | 86 |
| 25/170 | 80 | 185 | 111 | 6,9 - 7,5 | 0 | 40 | 87 |
| 30/170 | 80-85 | 188 | 100 | 7,8 - 8,8 | 0 | 60 | 88 |
| 35/160 | 70-85 | 187 | 100 | 6,3 - 7,5 | 0 | 40 | 85 |

Beispiel 11 — Vergleich

Pigmentierter Lack

Nach dem beschriebenen Verfahren wurde der Pulverlack mit folgender Rezeptur hergestellt, appliziert und zwischen 160° und 220 °C eingebrannt.

469,1 Gew.-T. Polyester gemäß Beispiel B1
190,9 Gew.-T. Vernetzer gemäß Beispiel A11
480,0 Gew.-T. Weißpigment ($TiO_2$)
60,0 Gew.-T. Verlaufmittel-Masterbatch

| Einbrenn-bedingung. | Mechanische Kenndaten | | | | | | |
|---|---|---|---|---|---|---|---|
| Zeit/Temp. min/ °C | SD | HK | HB | ET | GS | Imp. rev. | GG 60° |
| 6/200 | 70-80 | 180 | 100 | 9,2 - 9,9 | 0 | 70 | 86 |
| 8/200 | 80 | 181 | 111 | > 10 | 0 | > 82 | 89 |
| 10/200 | 60-75 | 184 | 125 | > 10 | 0 | > 82 | 88 |

Tabelle (Fortsetzung)

| Einbrenn-bedingung. | Mechanische Kenndaten | | | | | | |
|---|---|---|---|---|---|---|---|
| Zeit/Temp. min/ °C | SD | HK | HB | ET | GS | Imp. rev. | GG 60° |
| 15/180 | 70 | 180 | 111 | 9,7 -10,1 | 0 | > 82 | 90 |
| 20/180 | 70 | 180 | 111 | > 10 | 0 | > 82 | 90 |
| 25/180 | 70-80 | 179 | 111 | > 10 | 0 | > 82 | 87 |
| 25/170 | 60-70 | 182 | 111 | 9,3 - 9,9 | 0 | 50 | 88 |
| 30/170 | 70 | 178 | 125 | > 10 | 0 | 70 | 86 |
| 35/160 | 75-85 | 181 | 111 | 8,5 - 8,9 | 0 | 40 | 89 |

Beispiel 12

Pigmentierter Lack

Nach dem beschriebenen Verfahren wurde der Pulverlack mit folgender Rezeptur hergestellt, appliziert und zwischen 160° und 200 °C eingebrannt.

388 Gew.-T. Polyester gemäß Beispiel B1
162 Gew.-T. Vernetzer gemäß Beispiel A13
400 Gew.-T. Weißpigment ($TiO_2$)
50 Gew.-T. Verlaufmittel-Masterbatch

| Einbrenn-bedingung. | Mechanische Kenndaten | | | | | | |
|---|---|---|---|---|---|---|---|
| Zeit/Temp. min/ °C | SD | HK | HB | ET | GS | Imp. rev. | GG 60° |
| 6/200 | 60-70 | 172 | 111 | 7,2 - 7,7 | 0 | 70 | 80 |
| 8/200 | 60 | 170 | 125 | 7,8 - 8,8 | 0 | > 82 | 82 |
| 10/200 | 70-80 | 173 | 111 | 8,7 - 9,7 | 0 | 70 | 82 |
| 15/180 | 60-70 | 172 | 111 | 6,3 - 6,9 | 0 | 60 | 80 |
| 20/180 | 60 | 174 | 111 | 7,5 - 7,9 | 0 | 60 | 78 |
| 25/180 | 70-80 | 174 | 111 | 8,0 - 8,1 | 0 | 70 | 83 |
| 25/170 | 70 | 174 | 111 | 6,4 - 6,8 | 0 | 40 | 83 |
| 30/170 | 70-80 | 173 | 111 | 7,4 - 7,9 | 0 | 70 | 80 |
| 35/160 | 80 | 172 | 100 | 5,9 - 6,5 | 0 | 30 | 82 |

Beispiel 13 — Vergleich

Pigmentierter Lack

Nach dem beschriebenen Verfahren wurde der Pulverlack mit folgender Rezeptur hergestellt, appliziert und zwischen 160° und 200 °C eingebrannt.

465,6 Gew.-T. Polyester gemäß Beispiel B1
194,4 Gew.-T. Vernetzer gemäß Beispiel A6
480,0 Gew.-T. Weißpigment ($TiO_2$)
60,0 Gew.-T. Verlaufmittel-Masterbatch

Neben einer größeren Thermooxidationsinstabilität wurde auch nach der Behandlung im UV-Licht eine größere Kreidungsanfälligkeit und Glanzverlust registriert.

| Einbrenn-bedingung. | Mechanische Kenndaten | | | | | |
|---|---|---|---|---|---|---|
| Zeit/Temp. min/ °C | SD | HK | HB | ET | GS | Imp. rev. | GG 60° |
| 6/200 | 60–70 | 168 | 100 | 7,5 - 8,2 | 0 | 70 | 69 |
| 8/200 | 60–70 | 170 | 100 | 7,9 - 8,4 | 0 | > 82 | 66 |
| 10/200 | 60–65 | 169 | 100 | 8,7 - 9,6 | 0 | > 82 | 70 |
| 15/180 | 70 | 172 | 111 | 5,9 - 6,0 | 0 | 40 | 68 |
| 20/180 | 70–75 | 169 | 111 | 6,0 - 6,5 | 0 | 50 | 68 |
| 25/180 | 70–80 | 170 | 111 | 7,1 - 7,7 | 0 | 70 | 70 |
| 25/170 | 70–80 | 168 | 100 | 5,0 - 5,3 | 0 | 20 | 69 |
| 30/170 | 80 | 172 | 111 | 6,4 - 6,9 | 0 | 50 | 67 |
| 35/160 | 70–80 | 170 | 100 | 4,7 - 5,1 | 0 | 10 | 70 |

Beispiel 14 — Vergleich

Pigmentierter Lack

Nach dem beschriebenen Verfahren wurde der Pulverlack mit folgender Rezeptur hergestellt, appliziert und zwischen 160 °C und 200 °C eingebrannt.

428,9 Gew.-T. Polyester gemäß Beispiel B1
176,1 Gew.-T. Vernetzer gemäß Beispiel A20
440,0 Gew.-T. Weißpigment ($TiO_2$)
55,0 Gew.-T. Verlaufmittel-Masterbatch

| Einbrenn-bedingung. | Mechanische Kenndaten | | | | | | |
|---|---|---|---|---|---|---|---|
| Zeit/Temp. min/ °C | SD | HK | HB | ET | GS | Imp. rev. | GG 60° |
| 6/200 | 80–90 | 176 | 100 | 7,5 - 7,7 | 0 | 50 | 77 |
| 8/200 | 80 | 178 | 100 | 8,0 | 0 | 60 | 77 |
| 16/200 | 85–90 | 177 | 100 | 8,2 - 8,4 | 0 | > 82 | 75 |

Tabelle (Fortsetzung)

| Einbrenn-bedingung. | Mechanische Kenndaten | | | | | | |
|---|---|---|---|---|---|---|---|
| Zeit/Temp. min/ °C | SD | HK | HB | ET | GS | Imp. rev. | GG 60°/% |
| 15/180 | 90-100 | 180 | 100 | 5,7 - 7,7 | 0 | 40 | 76 |
| 20/180 | 80-90 | 177 | 100 | 6,9 - 7,4 | 0 | 40 | 78 |
| 25/180 | 80-95 | 178 | 111 | 8,0 - 8,4 | 0 | 70 | 74 |
| 25/170 | 90-100 | 178 | 100 | 6,2 - 6,7 | 0 | 30 | 75 |
| 30/170 | 90 | 180 | 100 | 7,1 - 7,7 | 0 | 50 | 75 |
| 35/160 | 80-95 | 179 | 100 | 5,7 - 6,4 | 0 | 20 | 77 |

D) Epoxidharz-Pulverlack

D 1. Eingesetzte Epoxidharze zur Herstellung der Pulverlacke

Es wurden zwei Epoxidharze auf Basis eines Adduktes aus 2.2-Bis-(4-hydroxylphenyl)-propan (Dian) und Epichlorhydrin verwendet, die erst einer HCl-Abspaltung unterworfen und danach mit weiterem Dian umgesetzt wurden.

Nach Angabe des Herstellers hatten die Epoxidharze folgende physikalische Daten :

D 1.1

| | |
|---|---|
| EP-Äquivalentgewicht | 900-1 000 |
| EP-Wert | 0,10-0,11 |
| OH-Wert | 0,34 |
| Schmelzbereich | 96-104 °C |

D 1.2

| | |
|---|---|
| EP-Äquivalentgewicht | 1 700-2 000 |
| EP-Wert | 0,05-0,059 |
| OH-Wert | 0,36 |
| Schmelzbereich | 125-132 °C |

Beispiel D 1.3

Pigmentierter Lack

Nach dem in Beispiel C beschriebenen Verfahren wurde der Pulverlack mit folgender Rezeptur hergestellt, appliziert und zwischen 180 und 200 °C eingebrannt.

87,9 Gew.-T. Epoxid gemäß Beispiel D 1.1
110,4 Gew.-T. Epoxid gemäß Beispiel D 1.2
126,7 Gew.-T. Vernetzer gemäß A1
150,0 Gew.-T. Weißpigment ($TiO_2$)
25,0 Gew.-T. Verlaufmittel-Masterbatch (10 % MODAFLOW[R] in Epoxid gemäß D. 1.1)

(Siehe Tabelle Seite 18 f.)

| Einbrenn-bedingung. | Mechanische Kenndaten | | | | | | |
|---|---|---|---|---|---|---|---|
| Zeit/Temp. min / °C | SD | HK | HB | ET | GS | Imp. rev. | GG 60° % |
| 15 / 200 | 60-70 | 193 | 111 | 5,7 - 7,0 | 0 | 40 | 84 |
| 20 / 200 | 70 | 195 | 111 | 6,4 - 8,0 | 0 | 60 | 86 |
| 25 / 180 | 70-80 | 190 | 111 | 5,2 - 6,8 | 0 | 30 | 85 |
| 30 / 180 | 65-80 | 197 | 111 | 6,7 - 7,1 | 0 | 50 | 85 |

Beispiel D 1.4

Pigmentierter Lack

Nach dem in Beispiel C beschriebenen Verfahren wurde der Pulverlack mit folgender Rezeptur hergestellt, appliziert und zwischen 180 und 200 °C eingebrannt.

108,4 Gew.-T. Epoxid gemäß Beispiel D 1.2
85,9 Gew.-T. Epoxid gemäß Beispiel D 1.1
130,7 Gew.-T. Vernetzer gemäß A 13
150,0 Gew.-T. Weißpigment ($TiO_2$)
25,0 Gew.-T. Verlaufmittel-Masterbatch (10 % MODAFLOW^R in Epoxid gemäß D 1.1)

| Einbrenn-bedingung. | Mechanische. Kenndaten | | | | | | |
|---|---|---|---|---|---|---|---|
| Zeit/Temp. min / °C | SD | HK | HB | ET | GS | Imp. rev. | GG 60° % |
| 15 / 200 | 60 | 192 | 111 | 5,8 - 6,0 | 0 | 30 | 83 |
| 20 / 200 | 60-75 | 187 | 111 | 6,1 - 7,8 | 0 | 70 | 83 |
| 25 / 180 | 70-80 | 193 | 111 | 5,5 - 6,5 | 0 | 20 | 85 |
| 30 / 180 | 65-75 | 190 | 111 | 6,2 - 7,1 | 0 | 50 | 84 |

**Patentansprüche**

1. Als Pulverlack bzw. Bindemittel für Pulverlacke geeignetes Stoffgemisch bestehend im wesentlichen aus :

a) einer Isocyanatkomponente mit partiell oder total blockierten Isocyanatgruppen,

b) einer Polyhydroxylkomponente und

c) gegebenenfalls den üblichen Hilfs- und Zusatzstoffen,

dadurch gekennzeichnet, daß als Isocyanatkomponente echte Mischtrimerisate bzw. Gemische der einzelnen Trimerisate aus einem Gemisch bestehend aus überwiegend 2-Methylpentandiisocyanat-1,5 (MPDI) und 2-Ethylbutandiisocyanat-1,4 (EBDI) nachstehender Formeln I und II

(I) 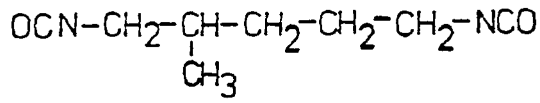 (MPDI)

(II) 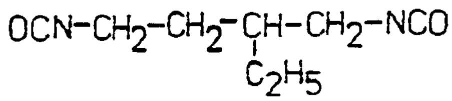 (EBDI)

welches folgende Zusammensetzung aufweist :

88-99 Gew.-% 2-Methylpentandiisocyanat-1,5
12- 1 Gew.-% 2-Ethylbutandiisocyanat-1,4

in Kombination mit 3-Isocyanatomethyl-3,5,5-trimethylcyclohexylisocyanat (IPDI) oder echte Mischurethanaddukte bzw. die Gemische der einzelnen Urethanaddukte aus der Umsetzung des MPDI/EBDI-Gemisches in Kombination mit IPDI mit Diolen und/oder Triolen zum Einsatz gelangen.

2. Als Pulverlack bzw. als Bindemittel für Pulverlacke geeignetes Stoffgemisch nach Anspruch 1, dadurch gekennzeichnet, daß das Verhältnis der zur Trimerisierung oder Urethanadduktbildung eingesetzten Diisocyanate MPDI/EBDI-Gemisch zu IPDI zwischen 90 und 10 Gew.-%, vorzugsweise zwischen 75 und 25 Gew.-% bzw. 25 und 75 Gew.-%, beträgt.

3. Als Pulverlack bzw. als Bindemittel für Pulverlacke geeignetes Stoffgemisch nach Anspruch 1, dadurch gekennzeichnet, daß die blockierte Isocyanatkomponente einen latenten NCO-Gehalt von 7-18 Gew.-%, vorzugsweise 9-15 Gew.-%, und einen freien NCO-Gehalt $\leq$ 3 Gew.-%, insbesondere $\leq$ 2 Gew.-%, aufweist.

4. Als Pulverlack bzw. Bindemittel für Pulverlacke geeignetes Stoffgemisch nach Anspruch 1, dadurch gekennzeichnet, daß das Trimerisat (Isocyanurat) mit gegebenenfalls höheren Oligomeren einen NCO-Gehalt von 14-22 Gew.-%, vorzugsweise 15,0-20,5 Gew.-%, und das Urethan-Addukt einen NCO-Gehalt von 11-19 Gew.-%, vorzugsweise 13-17 Gew.-%, aufweist.

5. Verwendung der Stoffgemische gemäß Anspruch 1 als Pulverlacke bzw. als Bindemittel für Pulverlacke zum Beschichten beliebiger hitzehärtbarer Substrate nach an sich bekannten, für die Verarbeitung von Pulverlacken geeigneten Beschichtungsmethoden.

**Claims**

1. A mixture of substances, suitable as a powder coating or binder for powder coatings, and essentially consisting of :

a) an isocyanate component with partially or totally blocked isocyanate groups,

b) a polyhydroxyl component and

c) optionally, the conventional auxiliaries and additives,

characterized in that as the isocyanate component there are employed genuine co-trimers, or mixtures of the individual trimers, obtained from a mixture consisting predominantly of 2-methylpentane-1,5-diisocyanate (MPDI) and 2-ethylbutane-1,4-diisocyanate (EBDI) of the following formulae I and II

(I) 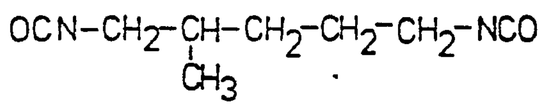 (MPDI)

(II) 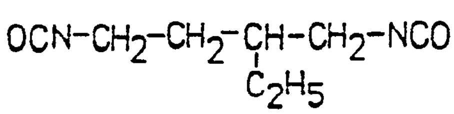 (EBDI)

which has the following composition :

88-99 % by weight of 2-methylpentane-1,5-diisocyanate
12- 1 % by weight of 2-ethylbutane-1,4-diisocyanate.

in combination with 3-isocyanatomethyl-3,5,5-trimethylcyclohexylisocyanate (IPDI) or genuine co-urethane adducts or mixtures of the individual urethane adducts obtained from the reaction of the MPDI/EBDI mixture, in combination with IPDI, with diols and/or triols.

2. A mixture of substances, suitable as a powder coating or as a binder for powder coatings, according to Claim 1, characterized in that the ratio of the diisocyanates employed for trimerization or urethane adduct formation, MPDI/EBDI mixture to IPDI, is between 90 and 10 % weight, preferably between 75 and 25 % by weight or 25 and 75 % by weight.

3. A mixture of substances suitable as a powder coating or as a binder for powder coatings, according to Claim 1, characterized in that the blocked isocyanate component has a latent NCO content of 7-18 % by weight, preferably 9-15 % by weight, and a free NCO content of ≤ 3 % by weight, especially ≤ 2 % by weight.

4. A mixture of substances suitable as a powder coating or as a binder for powder coatings, according to Claim 1, characterized in that the trimer (isocyanurate), together with any higher oligomers, has an NCO content of 14-22 % by weight, preferably 15.0-20.5 % by weight, and the urethane adduct has an NCO content of 11-19 % by weight, preferably 13-17 % by weight.

5. Use of the mixtures of substances according to Claim 1 as powder coatings or as binders for powder coatings, to be applied to any desired heat-curable substrates in accordance with coating methods known per se and suitable for processing of powder coatings.

**Revendications**

1. Mélange de substances convenant comme vernis en poudre, ou comme liants pour vernis en poudre, constitué essentiellement de :

a) un composant isocyanate comportant des groupes isocyanates partiellement ou totalement bloqués,

b) un composant polyhydroxyle, et

c) éventuellement, les additifs et produits auxiliaires courants,

mélange caractérisé en ce que l'on met en œuvre, avec des diols et/ou des triols comme composants isocyanates, des trimérisats mixtes véritables, ou des mélanges des différents trimérisats d'un mélange constitué de 2-méthylpentanediisocyanate-1,5 (MPDI), produit dominant, et de 2-éthylbutanediisocyanate-1,4 (EBDI) répondant aux formules I et II :

(I) 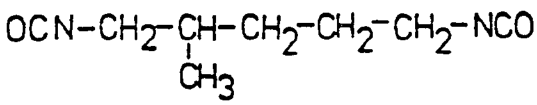 (MPDI)

(II) 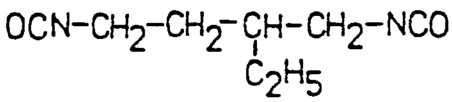 (EBDI)

qui présente la composition suivante :

88 à 99 % en poids de 2-méthylpentanediisocyanate-1,5
12 à 1 % en poids de 2-éthylbutanediisocyanate-1,4

en combinaison avec le 3-isocyanatométhyl-3,5,5-triméthylcyclohexylisocyanate (IPDI) ou de véritables produits d'addition d'uréthane ou les mélanges des différents produits d'addition d'uréthane provenant de la réaction du MPDI/EBDI en mélange, en combinaison avec IPDI.

2. Mélange de substances convenant comme vernis en poudre, ou comme liants pour vernis en poudre suivant la revendication 1, caractérisé en ce que, le rapport entre le mélange MPDI/EBDI, utilisé pour la trimérisation ou la formation du produit d'addition d'uréthane, et l'IPDI se monte entre 90 et 10 % en poids, de préférence entre 75 et 25 % en poids, ou 25 et 75 % en poids.

3. Mélange de substances suivant la revendication 1, caractérisé en ce que le composant isocyanate bloqué présente une teneur latente en NCO de 7 à 18 % en poids, de préférence 9 à 15 % en poids, et une teneur en NCO libres ≤ 3 % en poids ou mieux ≤ 2 % en poids.

4. Mélange de substances suivant la revendication 1, caractérisé en ce que le trimérisat (isocyanurate), avec éventuellement les oligomères supérieurs, présente une teneur en NCO de 14 à 22 % en poids de préférence 15 à 20.5 % en poids, et le produit d'addition d'uréthane, une teneur en NCO de 11 à 19 % en poids, de préférence de 13 à 17 % en poids.

5. Utilisation de mélanges de substances suivant la revendication 1, comme vernis en poudre, ou comme liants de vernis en poudre pour revêtir des substrats durcissables à la chaleur quelconque, suivant les procédés d'application de revêtements connus, convenant pour l'application des vernis en poudre.